# EUROPÄISCHE PATENTANMELDUNG

(11) **EP 4 046 773 A1**
(43) Veröffentlichungstag der Anmeldung: **24.08.2022**
(21) Anmeldenummer: 21158492.5
(22) Anmeldetag: 22.02.2021
(51) Int. Cl.: B29C 45/16, C08K 3/34, H01B 3/30, H02K 3/40

(54) **ISOLATIONSSYSTEM FÜR ELEKTRISCHE ROTIERENDE MASCHINEN, HERSTELLUNGSVERFAHREN DAZU SOWIE PULVERLACKBESCHICHTUNG**

(71) Anmelder: Siemens Aktiengesellschaft, 80333 München (DE); Siemens Mobility GmbH, 81739 München (DE)
(72) Erfinder: Lang, Steffen, 91352 Hallerndorf (DE); Maleika, Marek, 90766 Fürth (DE); Müller, Niels, 90425 Nürnberg (DE); Schemmel, Florian, 90455 Nürnberg (DE)

(57) **Zusammenfassung**

Die Erfindung betrifft ein Isolationssystem für eine elektrische rotierende Maschine, insbesondere Elektromotor und/oder Generator. Außerdem betrifft die Erfindung eine Pulverlackformulierung zur Herstellung zumindest eines Teils eines Isolationssystems, sowie ein Verfahren zur Herstellung eines Isolationssystems. Durch die vorliegend offenbarte Erfindung, die bekannten Wickelband-Isolationssysteme durch Pulverlackbeschichtungen ganz oder teilweise zu ersetzen und/oder automatisiert aufzubringen, ist es möglich, nicht nur die Wickelbandapplikationen per Hand ohne Einbußen bei der Qualität des Isolationssystems wegzulassen, sondern die Herstellung sogar zu automatisieren. Die Teilentladungsresistenz des Isolationsstoffes wird durch Vorhandensein einer gewissen Menge an-[O-SiR₂-O-]ₙ-Rückgrat im Monomer und/oder Oligomer der Pulverlackformulierung und damit auch im fertig ausgehärteten Isolationssystem gegenüber einem reinen Polyimid soweit erhöht das eine elektrische Lebensdauer des Isolationssystems resultiert, die wirtschaftlich ist.

## Beschreibung

Die Erfindung betrifft ein Isolationssystem für eine elektrische rotierende Maschine, insbesondere Elektromotor und/oder Generator. Außerdem betrifft die Erfindung eine Pulverlackbeschichtung, die Teil eines Isolationssystems ist, sowie ein Verfahren zur Herstellung eines Isolationssystems.

Bekannt sind elektrische rotierende Maschinen im Mittel- und Hochspannungsbereich wie Elektromotoren und elektrische Generatoren. Diese Maschinen zeichnen sich durch eine Vielzahl verschiedener Bauformen und Einsatzbereiche aus. Sie werden in sämtlichen Bereichen der Technik, der Industrie, des Alltags, des Verkehrswesens, der Medizin und anderen Gebieten verwendet. Der Leistungsbereich elektrischer Maschinen erstreckt sich von Größenordnungen unterhalb von einem Mikrowatt z.B. in der Mikrosystemtechnik bis hinaus über ein Gigawatt, also Tausendmal eine Million Watt, wie beispielsweise im Kraftwerksbereich. Dazwischen liegt die Mittelspannungs-Anwendung mit den Traktions- und Antriebsmotoren im Fahrzeugbereich, Schienenfahrzeugbereich, etc.

Allen rotierenden elektrischen Maschinen gemeinsam sind Drahtspulen, die vom elektrischen Strom durchflossen werden. Zur elektrischen Isolation der stromdurchflossenen Teile gegeneinander und gegenüber der äußeren Umgebung weisen elektrische Maschinen Isolationssysteme auf.

Elektrische rotierende Maschinen, z. B. Elektromotoren und Generatoren ab einer Bemessungsspannung von 700 V umfassen einen Rotor, der vom Stator umgeben ist. Der Stator hat ein Blechpaket, in dem sich Nuten befinden, in die die elektrischen Leiter in Form von Spulen oder als Einzelstäbe, die zu Spulen verschweißt oder verlötet werden, eingelegt sind. Jeweils zwei korrespondierende Einzelstäbe können miteinander zur Bildung einer Spule verlötet werden. Die elektrischen Teilleiter sind in der Spule gegeneinander isoliert, die Spule zusätzlich mit einer Hauptisolierung aus Glimmerhaltigen Isolierbändern versehen und abschließend optional abhängig vom Spannungsniveau noch mit einem leitfähigen Glimmschutz, insbesondere einem Außen- und/oder Endenglimmschutz versehen, so dass die Oberfläche der Spule auf dem gleichen Potential wie das Blechpaket liegt. Diesen Aufbau nennt man auch eine "geordnete" Wickelung im Gegensatz zu den elektrischen rotierenden Maschinen mit Drähten in einer "wilden" Wicklung, die in der Regel elektrische rotierende Maschinen einer Bemessungsspannung kleiner 700 Volt betreffen.

Bei elektrischen rotierenden Maschinen im Hoch- und/oder Mittelspannungsbereich liegen Spulen aus gegeneinander beispielsweise über Bewicklung und/oder Drahtlack isolierte Teilleitern vor. Diese werden aus Rohlingen, wie einem Spulenfisch durch Ziehen und Verdrehen so geformt, dass sie in die Nuten eines Stator-Grundkörpers, also in das Blechpaket des Elektromotors eingelegt werden können. Die Spulen untereinander sind über so genannte Wickelköpfe verbunden und durch entsprechende Anschlüsse kontaktiert.

Die stromführenden Spulen sind gegeneinander, gegenüber dem Blechpaket und schließlich auch gegenüber der Umgebung durch ein Isolationssystem isoliert. Das Isolationssystem umfasst regelmäßig die Hauptisolation, die einen reinen Isolator darstellt und das Glimmschutzsystem, das die Komponenten Außenglimmschutz und/oder Endenglimmschutz umfasst.

Weitestgehend ist die spannungsführende Spule dabei durch die Hauptisolation aus polymerbasierten Werkstoffen vom geerdeten Blechpaket isoliert. Um ein Maximum an Leistung aus der Maschine herauszuholen, wird sie bei höchstmöglichen Stromdichten betrieben, wodurch aber auch nennenswerte Verluste in Form von Hitze entstehen.

Bei großen Elektromotoren ist die maximale übliche Betriebstemperatur ca. 155°C. Für diese Betriebstemperaturen ist es bekannt, ein Isolationssystem aus Glimmerband und epoxidbasierten duroplastischen Kunststoffen einzusetzen. Der Motor ist so ausgelegt, dass die maximale Aufheizung - auch der Isolation - 155°C nicht oder nur unwesentlich überschreitet.

Um die Leistungsdichte einer solchen Maschine zu erhöhen wird entweder die Spannung erhöht oder die Stromstärke. Würde die Spannung erhöht werden, müsste dauerhaft eine höhere Feldstärke über das Isolationssystem abgebaut werden. Dafür sind die herkömmlich bekannten Isolationssysteme auf Epoxidbasis nicht ausgelegt.

Wird die Stromstärke erhöht, dann wird das Isolationssystem thermisch stärker belastet, zumindest kurzzeitig sogar auf über 200°C. Dafür werden Isolationssysteme mit den Materialien auf Basis von mAramid und Polyetherimid eingesetzt.

Bislang werden alle Komponenten eines Isolationssystems, also Hauptisolation und Glimmschutz, wie insbesondere Außenglimmschutz AGS und Endenglimmschutz EGS, in der Regel als Bänder auf die Teilleiter aufgewickelt, wobei Teile davon, wie der EGS, auch per Hand appliziert werden können. Die anderen Teile können auch nicht vollautomatisiert aufgebracht werden, weil entweder die Stückzahl das Automatisieren nicht wirtschaftlich macht und/oder die Gefahr von Lufteinschlüssen in den Falten der Wickelbänder die Qualität nicht gewährleistet, die bei der Wicklung erforderlich ist. Die Bänder, die gewickelt werden, haben meistens verklebte Glimmerplättchen, die in der Isolation dazu dienen, den Erosionsweg im Isolationssystem zu verlängern, also den direkten Weg von der Spannungsseite, den Leitern, hin zum geerdeten Blechpaket, wodurch eine deutlich längere Lebensdauer eines Isolationssystems resultiert.

Aufgabe der vorliegenden Erfindung ist es daher ein Isolationssystem zu schaffen, das erstens automatisiert applizierbar ist und zweitens auch bei Betriebstemperaturen oberhalb 155°C, insbesondere auch bis zu 200°C oder 220°C noch stabil ist.

Diese Aufgabe wird durch den Gegenstand der vorliegenden Erfindung, wie er in der Beschreibung und den Ansprüchen offenbart wird, gelöst.

Dementsprechend ist Gegenstand der vorliegenden Erfindung ein Isolationssystem für eine elektrische rotierende Maschine mit einer Bemessungsspannung größer 700 Volt, eine Hauptisolation und gegebenenfalls einen Glimmschutz umfassend, wobei zumindest ein Teil der Komponenten des Isolationssystems durch Pulverbeschichtung mit einer Pulverlackformulierung erhältlich ist, die zumindest zwei unvernetzte Kunststoffkomponenten umfasst, wobei zumindest eine erste unvernetzte Polyimid-haltige Kunststoffkomponente und zumindest eine zweite, unvernetzte Siloxan-haltige Kunststoffkomponente in der Pulverlackformulierung enthalten sind, die jeweils bei Raumtemperatur unter Normalbedingungen, also bei ca. 20°C als Feststoff vorliegen. Außerdem ist Gegenstand der Erfindung ein Verfahren zur Herstellung eines Isolationssystems, eine Hauptisolation und gegebenenfalls noch Glimmschutz umfassend, folgende Verfahrensschritte umfassend:
- Bereitstellung einer Pulverlackformulierung mit zumindest zwei unvernetzten Kunststoffkomponenten, wobei zumindest eine erste unvernetzte Polyimid-haltige Kunststoffkomponente und zumindest eine zweite, unvernetzte Siloxan-haltige Kunststoffkomponente in der Pulverlackformulierung enthalten sind, die jeweils bei Raumtemperatur unter Normalbedingungen, also bei ca. 20°C als Feststoff vorliegen,
- Einmalige oder mehrmalige Pulverbeschichtung eines elektrisch leitfähigen Substrats, wie gegebenenfalls eines durch Teilleiterisolation vorisolierten Leiters, beispielsweise in Form einer Spule, eines Stabs, eines Wickelkopfes und/oder eines Spulenfisches sowie anschließende
- Aus- und/oder Nachhärtung der so erhaltenen Pulverbeschichtung.
Schließlich ist noch Gegenstand der Erfindung eine Pulverbeschichtung als Teil eines Isolationssystems einer elektrischen rotierenden Maschine mit einer Bemessungsspannung größer 700 Volt, die einen Film aus zumindest zwei Kunststoff-komponenten, einer polyimidhaltigen Kunststoffkomponente und einer siloxanhaltigen Kunststoffkomponente, umfasst.

Allgemeine Erkenntnis der Erfindung ist es, dass Wickelbandisolationen bei elektrischen rotierenden Maschinen mit Bemessungsspannung größer/gleich 700V durch Pulverbeschichtung mit einer bei Raumtemperatur festen Pulverlackformulierung, die zumindest zwei unvernetzte Kunststoffkomponenten, eine auf Basis von Polyimid und eine auf Basis von Siloxan umfasst, durch maschinell leicht automatisierbare Pulverlackbeschichtungen ersetzt werden können.

Die Herstellung der unvernetzten Pulverlackformulierung gelingt einfach durch Abwiegen und Mischen, wobei der Pulverlack auf dem Substrat, der Spule oder des Spulenteils, anschmilzt, entgast und/oder an-vernetzt wird. Nach der Pulverbeschichtung und dem Erhalt eines festen Films wird bei erhöhter Temperatur nach- und ausgehärtet.

Man unterscheidet dabei 2 Arten der Pulverbeschichtungen, zum einen die
- elektrostatische Pulverbeschichtung, die entweder über Korona, als Aufladung durch einen Generator oder über die so genannte "Tribo"-Methode, mit Reibungs-Aufladung funktioniert und zum zweiten die
- Wirbelsintermethode, die auch aus dem Automobilbereich in Form von "Pulverslurry" bekannt ist.

Beim elektrostatischen Pulverbeschichten wird die Pulverlackformulierung auf ein elektrisch leitendes Werkstück aufgesprüht. Mit einem so genannten Sprühorgan, also beispielsweise der Sprühpistole, wird das wirbelnde Pulver zu einem definierten Sprühstrahl geformt und gleichzeitig elektrostatisch aufgeladen, wobei für das hier anwendbare Verfahren unterschiedliche Aufladungsmethoden möglich sind.

Bei Korona-Sprühsystemen erfolgt die Aufladung der Pulverteilchen der Pulverlackformulierung durch Anlagerungen freier Luftionen, die mittels einer oder mehrerer spannungsführender Korona Elektroden im Sprühorgan erzeugt werden. In der Regel wird eine negative Spannung gewählt, weil die Korona stromstärker und stabiler ist und die Rücksprüheffekte an der Werkstückoberfläche in geringerem Maße auftreten. An der Korona Elektrode liegt eine Spannung von bis zu 100 kV an.

Bei "Tribo"-Sprühsystemen werden die Pulverteilchen der Pulverlackformulierung ausschließlich durch reibungselektrische Vorgänge beim Durchströmen eines Kunststoffkanals im Sprühorgan, also beispielsweise in der Sprühpistole, aufgeladen also ohne Spannungserzeuger. Dabei werden die Pulverteilchen positiv aufgeladen.

Nach dem Besprühen erfolgt das Aushärten und/oder das Einbrennen, wobei der Pulverlack außer den Lösemittel alle Bestandteile eines normalen Nasslacks enthalten kann und so - abhängig von der Kunststoff-Komponenten-Zusammensetzung bei höheren Temperaturen, z. B. über 100°C, insbesondere über 120°C zu einem geschlossenen Film verläuft und anschließend dann angeliert und aushärtet.

Gegenüber den Nasslackierungen gibt es beim Pulverbeschichten einige Vorteile unter Kosten- und/oder UmweltGesichtspunkten:
- Lösemittelfreies Beschichtungsmaterial und minimale Emission,
- Kreislaufführen des Pulverlacks möglich,
- einfache manuelle Handhabung einer Sprühpistole oder eines sonstigen Sprühorgans und
- zur Automatisierung geeignet.

Alternativ dazu lässt sich Pulverbeschichtung auch durch ein Wirbelsinterverfahren ausführen. Dabei wird ein Pulverbad aus bewegter Luft, insbesondere Luftstrom, und der fluidisierten Pulverlackformulierung bereitgestellt und ein erhitztes Substrat in dieses Pulverbad -z.B. auch nur einige Sekunden - eingetaucht. Beim Kontakt mit dem heißen Substrat sintert das Pulver an und verschmilzt und/oder vernetzt anschließend zu einer glatten Kunststoffschicht. Beispielsweise kann bei der Herstellung des Isolationssystems eine finale Isolation der Wickelköpfe durch Wirbelbettsintern bei ca. 200°C erfolgen.

Nach einer vorteilhaften Ausführungsform der Erfindung liegen in der Pulverlackformulierung eine oder mehrere erste Polyimid-haltige Kunststoffkomponente(n) und eine oder mehrere zweite Siloxan-haltige Kunststoffkomponente(n) vor.

Als "Polyimid" im festen aber unvernetzten Pulverlack wird ein Monomer oder Oligomer eines eine "Polyimidgruppe" aufweisenden Kunststoffs bezeichnet. Dies bezeichnet im Allgemeinen eine Verbindung mit einer Einheit wie in Strukturformel I wiedergegeben:

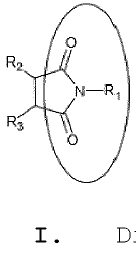

Die Polyimidgruppe ist dabei eingekreist.

Als "Siloxan" wird vorliegend ein Poly(organo)siloxan bezeichnet und steht für eine Gruppe synthetischer Kunststoff-Polymere, bei denen Siliciumatome über Sauerstoffatome verknüpft sind, bei denen also die Einheit -[O-SiR₂-O-SiR₂-]ₙ-im polymeren Rückgrat vorkommt. Die Zusammensetzung der Siloxaneinheit ergibt sich unter Berücksichtigung der Tatsache, dass jedes Sauerstoffatom als Brückenglied zwischen je zwei Siliziumatomen liegt, wobei eine Siloxaneinheit ein bis vier weitere Substituenten aufweisen kann (Oktettregel).

Nach einer vorteilhaften Ausführungsform liegt die zweite Siloxan-Kunststoffkomponente als Gemisch mehrerer Poly(organo)siloxane vor. Beispielsweise kann ein geeignetes Poly(organo)siloxan ausgewählt sein aus der Gruppe folgender Poly(organo)siloxane: eine monomere und/oder oligomere Kunststoffkomponente auf Silizium-Sauerstoff-Basis, die beispielsweis auf Alkyl- und/oder Aryl-Polysiloxan und/oder auf Silsesquioxan -Basis beruht.

Gemäß der Erfindung ist als zweite, unvernetzte Siloxan-haltige Kunststoffkomponente für die Pulverlackformulierung ein unvernetztes Siloxan Polymer, das nach erfolgter Härtung ein siloxanhaltiges Polymer bildet, in dem eine -[O-SiR₂-O]ₙ-Einheit im Rückgrat des Polymers enthalten ist.

Dabei steht "R" für alle Arten organischer Reste, die sich zur Härtung und/oder Vernetzung zu einem für ein Isolationssystem brauchbaren Isolationsstoff eignen. Insbesondere steht R für -Aryl, -Alkyl, -Heterocyclen, Stickstoff, Sauerstoff und/oder Schwefel substituierte Aryle und/oder Alkyle.

Insbesondere kann R gleich oder ungleich sein und für folgende Gruppen stehen:
- Alkyl, beispielsweise -Methyl, -Propyl, -isoPropyl, - Butyl, -isoButyl, -tertButyl, -Pentyl, -isoPentyl, - Cyclopentyl sowie alle weiteren Analoge bis zu Dodecyl, also das Homologe mit 12 C-Atomen;
- Aryl, beispielsweise: Phenyl-, Benzyl-, Benzoyl-, Biphenyl-, Toluyl-, Xylole sowie vergleichbare Aromaten, insbesondere beispielsweise alle Arylreste, mit einem oder mehreren Ringen, deren Aufbau der Definition von Hückel für die Aromatizität entspricht,
- Heterozyklen: insbesondere schwefelhaltige Heterozyklen wie Thiophen, Tetrahydrothiophen, 1,4-Thioxan und Homologe und/oder Derivate davon,
- Sauerstoffhaltige Heterozyklen wie z.B. Dioxane,
- Stickstoffhaltige Heterozyklen wie z.B. solche mit -CN, - CNO,-CNS, Substituenten am Ring oder an den Ringen und
- Schwefel substituierte Aryle und/oder Alkyle: z.B. Thiophen, aber auch Thiole.

Die Hückel-Regel für aromatische Verbindungen bezieht sich auf den Zusammenhang, dass planare, cyclisch durchkonjugierte Moleküle, die eine Anzahl von Π-Elektronen, die sich in Form von 4n + 2 darstellen lässt, umfasst, eine besondere Stabilität besitzen, die auch als Aromatizität bezeichnet wird.

Beispielsweise wird die zur Polymerisation funktionalisierte monomere oder oligomere zweite, unvernetzte Siloxan-haltige Kunststoffkomponente, die ein -[O-SiR₂-O]ₙ-Rückgrat hat, mit einer oder mehreren Polyimiden als Copolymer in der Pulverlackformulierung eingesetzt.

Dabei ist es insbesondere auch vorteilhaft, wenn ein Copolymer als Block-Copolymer eingesetzt wird.

Die Verbindung der ersten und zweiten Kunststoffkomponente kann in der Pulverlackformulierung auch als Blend vorliegen, beispielsweise auch als Blend eines Polymers mit zumindest einer Polyimid-Verbindung mit einem Copolymer aus Siloxan und Polyimid oder als Blend zweier Copolymere, einem Polyimidhaltigem Copolymer und einem Siloxan-haltigem Copolymer.

Insbesondere können dabei erste und zweite Kunststoffkomponente auch als Mischung, in Form eines Blends vorliegen.

Als zur Polymerisation funktionalisierte monomere oder oligomere zweite, unvernetzte Siloxan-haltige Kunststoffkomponente, die ein -[O-SiR₂-O-]ₙ-Rückgrat bildet, eignen sich beispielsweise alle glycidyl-basierte und/oder epoxy-terminierte Aryl- und/oder Alkyl-Siloxane, wie beispielsweise glycidoxy- und/oder Hydroxy- funktionalisierte Siloxane.

Handelsüblich ist beispielsweise folgende, also Hydroxyfunktionalisierte-Polyphenylsiloxan Komponente geeignete Verbindung von Wacker AG erhältlich:
Wacker_SILRES-603

Des Weiteren eignet sich als zweite, unvernetzte Siloxan-haltige Kunststoffkomponente in der Pulverlackformulierung auf Silizium-Sauerstoff-Basis ein oder mehrere Silsesquioxane oder Derivate des Silsesquioxan. Das ist eine organische Silizium-Sauerstoff-basierte Verbindung mit käfigartiger oder polymeren Strukturen die ein -[O-SiR₂-O-]ₙ-Rückgrat haben, wie die unten gezeigten Beispiele: 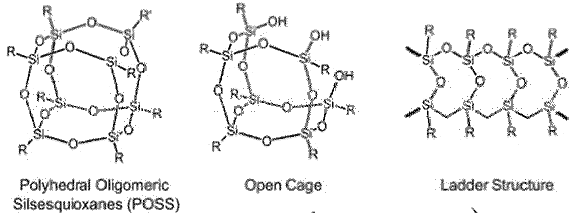 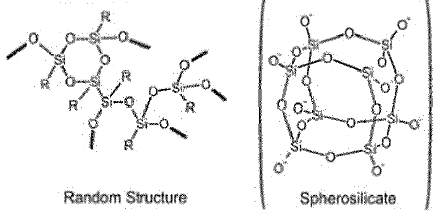 insbesondere kann R hierbei gleich oder ungleich sein und für folgende Gruppen stehen:
- Alkyl, beispielsweise -Methyl, -Propyl, -isoPropyl, - Butyl, -isoButyl, -tertButyl, -Pentyl, -isoPentyl, - Cyclopentyl sowie alle weiteren Analoge bis zu Dodecyl, also das Homologe mit 12 C-Atomen;
- Aryl, beispielsweise: Benzyl-, Benzoyl-, Biphenyl-, Toluyl-, Xylole sowie vergleichbare Aromaten, insbesondere beispielsweise alle Arylreste, mit einem oder mehreren Ringen, deren Aufbau der Definition von Hückel für die Aromatizität entspricht,
- Heterozyklen: insbesondere schwefelhaltige Heterozyklen wie Thiophen, Tetrahydrothiophen, 1,4-Thioxan und Homologe und/oder Derivate davon,
- Sauerstoffhaltige Heterozyklen wie z.B. Dioxane,
- Stickstoffhaltige Heterozyklen wie z.B. solche mit -CN, - CNO,-CNS, Substituenten am Ring oder an den Ringen und
- Schwefel substituierte Aryle und/oder Alkyle: z.B. Thiophen, aber auch Thiole.
- Handelsüblich ist beispielsweise folgende, also Hydroxyfunktionalisierte- Polyphenylsilsesquioxane Verbindung von Dow Europe GmbH erhältlich:
- Dowsil RSN-0217

Nach einer vorteilhaften Ausführungsform der Erfindung wird die Pulverlackformulierung so aufgebracht, dass eine Dicke der daraus gebildeten Isolations- und/oder Glimmschutzschicht von >/= 100pm resultiert. Diese Schicht kann einlagig oder mehrlagig durch Pulverbeschichtung erzeugt werden.

Nach einer vorteilhaften Ausführungsform umfasst die Formulierung des Weiteren noch Füllstoffe, insbesondere sphärisch geformte und/oder unregelmäßig geformte Füllstoffe. Die Füllstoffe können kristallin und/oder amorph vorliegen.

Bevorzugt sind die Füllstoffe auf Siliziumdioxid-Basis, beispielsweise enthalten sie Quarzgut, Quarzmehl und/oder Quarzglas.

Es wurde erkannt, dass die Resistenz der sprühbaren Pulverlackformulierung durch Zugabe von Füllstoffen, insbesondere von mineralischen oder/auch synthetischen Füllstoffen, wie Quarzmehl, Quarzgut, Glasmehl, in einem Masseanteil von beispielsweise 5 Gew% bis 65 Gew% erhöht wird, wenn zumindest ein Teil des Harzes durch eine teilentladungsresistente Komponente ausgetauscht wird. Als teilentladungsresistente Komponente wird dabei die zweite, auf Silizium anstelle von Kohlenstoff basierende Harzkomponente bezeichnet. Diese kann entweder ein Polysiloxan oder eine Silsesquioxan respektive ein oder ein Gemisch mehrerer Derivate dieser Siliziumhaltigen Verbindungen mit Sauerstoff sein.

So kann auf den Einsatz der zum Band verklebten großen Glimmerplättchen verzichtet und das Isolationsmaterial in Form einer Pulverlackformulierung automatisiert durch Versprühen und/oder Eintauchen appliziert und hergestellt werden.

Nach einer weiteren vorteilhaften Ausführungsform des Verfahrens wird die Bereitstellung der Pulverlackformulierung durch die Zugabe von elektrisch leitfähigem Füllstoff, gegebenenfalls in mehreren Fraktionen vorliegend, ergänzt.

Nach einer vorteilhaften Ausführungsform des Verfahrens wird die Pulverlackierung automatisiert durchgeführt.

Nach einer vorteilhaften Ausführungsform der Erfindung umfasst die bei Raumtemperatur als Pulver von Feststoffen vorliegende Pulverlackformulierung noch Füllstoffe, insbesondere in mehreren Fraktionen vorliegend, sowie Sinterhilfen und/oder Additive. Bei der Bereitstellung eines Pulverlacks zur Herstellung einer elektrisch teilleitfähigen oder leitfähigen Komponente des Isolationssystems werden der Pulverlackformulierung elektrisch leitfähige Füllstoffe, gegebenenfalls in mehreren Fraktionen, zugegeben.

Nach einer weiteren vorteilhaften Ausführungsform der Erfindung können in der Pulverlackformulierung ein oder mehrere Additive enthalten sein. Beispielsweise können Additive zur Verbesserung der Verarbeitbarkeit enthalten sein.

Andererseits oder ergänzend können Additive zur Erhöhung der Stabilität des Isolationssystems enthalten sein. Beispielsweise können ein oder mehrere Metalloxid(e), wie z.B. TiO₂ und/oder solche mit einer der folgenden Summenformeln Na₈Al₆Si₆O₂₄S₄ und/oder Na₆Al₆Si₆O₂₄S₂. Weitere Additive können Fe₂O₃ und/oder MnFe₂O₄ und/oder elektrisch nichtleitfähige Kohlenstoff basierte Füllstoffe, wie z.B. Industrieruß sein. Bei Bedarf können die Additiv-Partikel teilweise oder ganz, vollflächig oder teilflächig, mit einer SiO₂-Beschichtung ausgestattet vorliegen.

Diese Additive sind insbesondere auch oxidationshemmend, so dass die Wärmeklasse oder der Temperatur-Index einer damit hergestellten Pulverbeschichtung weiter erhöht werden kann.

Additive werden beispielsweise bei der Herstellung der Pulverlackformulierung zugemischt. Weitere Additive, Verlaufshilfsmittel, Farbpigmente, Quarzpartikel und weiteres können der Pulverlackformulierung zugemischt werden.

Der Anteil an Additiv in der Pulverlackbeschichtung liegt beispielsweise im Bereich zwischen 0,05 und 10 Gew%, insbesondere im Bereich zwischen 0,05 und 2 Gew% und besonders bevorzugt im Bereich zwischen 0,1 und 1 Gew%.

Durch die vorliegend offenbarte Erfindung, die bekannten Wickelband-Isolationssysteme durch Pulverlackbeschichtungen ganz oder teilweise zu ersetzen und/oder automatisiert aufzubringen, ist es möglich, nicht nur die Wickelbandapplikationen per Hand ohne Einbußen bei der Qualität des Isolationssystems wegzulassen, sondern die Herstellung sogar zu automatisieren. Die Teilentladungsresistenz des Isolationsstoffes wird durch Vorhandensein einer gewissen Menge an -[O-SiR₂-O-]ₙ-Rückgrat im Monomer und/oder Oligomer der Pulverlackformulierung und damit auch im fertig ausgehärteten Isolationssystem gegenüber einem reinen Polyimid soweit erhöht das eine elektrische Lebensdauer des Isolationssystems resultiert, die wirtschaftlich ist.

## Patentansprüche

1. Isolationssystem für eine elektrische rotierende Maschine mit einer Bemessungsspannung größer 700 Volt, eine Hauptisolation und gegebenenfalls einen Glimmschutz umfassend, wobei zumindest ein Teil der Komponenten des Isolationssystems durch Pulverbeschichtung mit einer Pulverlackformulierung erhältlich ist, die zumindest zwei unvernetzte Kunststoffkomponenten umfasst, wobei zumindest eine erste unvernetzte Polyimid-haltige Kunststoffkomponente und zumindest eine zweite, unvernetzte Siloxan-haltige Kunststoffkomponente in der Pulverlackformulierung enthalten sind, die jeweils bei Raumtemperatur unter Normalbedingungen, also bei ca. 20°C als Feststoff vorliegen.

2. Isolationssystem nach Anspruch 1, wobei die erste unvernetzte Polyimid-haltige Kunststoffkomponente der Pulverlackformulierung ein oder mehrere Polyimide umfasst.

3. Isolationssystem nach Anspruch 1 oder 2, wobei die erste unvernetzte Polyimid-haltige Kunststoffkomponente der Pulverlackformulierung ein Gemisch, ein Copolymer und/oder ein Blend, mehrere Kunststoffkomponenten umfassend, enthält.

4. Isolationssystem nach einem der vorhergehenden Ansprüche, wobei die zweite unvernetzte Siloxan-haltige Kunststoffkomponente der Pulverlackformulierung ein oder mehrere Siloxane umfasst.

5. Isolationssystem nach einem der vorhergehenden Ansprüche, wobei die zweite unvernetzte Siloxan-haltige Kunststoffkomponente der Pulverlackformulierung ein Gemisch, ein Copolymer und/oder ein Blend, mehrere Kunststoffkomponenten umfassend, enthält.

6. Isolationssystem nach einem der vorhergehenden Ansprüche, wobei die beiden unvernetzten Kunststoffkomponenten als Gemisch, Blend oder Copolymer vorliegen.

7. Isolationssystem nach einem der vorhergehenden Ansprüche, wobei die beiden unvernetzten Kunststoffkomponenten als Block-Copolymer vorliegen.

8. Isolationssystem nach einem der vorhergehenden Ansprüche, wobei in der zweiten unvernetzten Siloxanhaltigen Kunststoffkomponente der Pulverlackformulierung ein oder mehrere Siloxane ausgewählt aus der Gruppe der glycidyl-basierten und/oder epoxyterminierten und/oder hydroxy-terminierten Aryl- und/oder Alkyl-Siloxane enthalten sind.

9. Isolationssystem nach einem der vorhergehenden Ansprüche, wobei in der zweiten unvernetzten Siloxanhaltigen Kunststoffkomponente der Pulverlackformulierung ein oder mehrere Siloxane ausgewählt aus der Gruppe der Silsesquioxane enthalten sind.

10. Isolationssystem nach einem der vorhergehenden Ansprüche, wobei in der Pulverlackformulierung Füllstoffe enthalten sind.

11. Isolationssystem nach einem der vorhergehenden Ansprüche, wobei in der Pulverlackformulierung Additive enthalten sind.

12. Pulverbeschichtung als Teil eines Isolationssystems einer elektrischen rotierenden Maschine mit einer Bemessungsspannung größer 700 Volt, die einen festen Film aus zumindest zwei Kunststoffkomponenten, einer polyimidhaltigen Kunststoffkomponente und einer siloxanhaltigen Kunststoffkomponente, umfasst.

13. Pulverbeschichtung als Teil eines Isolationssystems nach Anspruch 12, deren Dicke größer/gleich 100pm ist.

14. Verfahren zur Herstellung eines Isolationssystems, eine Hauptisolation und gegebenenfalls noch einen Glimmschutz umfassend, folgende Verfahrensschritte umfassend:
- Bereitstellung einer Pulverlackformulierung mit zumindest zwei unvernetzten Kunststoffkomponenten, wobei zumindest eine erste unvernetzte Polyimid-haltige Kunststoffkomponente und zumindest eine zweite, unvernetzte Siloxan-haltige Kunststoffkomponente in der Pulverlackformulierung enthalten sind, die jeweils bei Raumtemperatur unter Normalbedingungen, also bei ca. 20°C als Feststoff vorliegen,
- Einmalige oder mehrmalige Pulverbeschichtung eines elektrisch leitfähigen Substrats, wie gegebenenfalls eines durch Teilleiterisolation vorisolierten Leiters, beispielsweise in Form einer Spule, eines Stabs, eines Wickelkopfes und/oder eines Spulenfisches sowie anschließende
- Aus- und/oder Nachhärtung der so erhaltenen Pulverbeschichtung.

15. Verfahren nach Anspruch 14, das automatisiert durchgeführt wird.
